# EUROPEAN PATENT SPECIFICATION

(11) **EP 3 965 455 B1**
(45) Date of publication and mention of the grant of the patent: **15.11.2023**
(21) Application number: 20798145.7
(22) Date of filing: 13.04.2020
(51) Int. Cl.: H04L 1/06, H04L 1/08, H04W 76/15, H04W 60/04, H04W 76/11, H04W 76/38

(54) **MULTI-CELL CONFIGURATION METHOD AND APPARATUS, STORAGE MEDIUM, TERMINAL AND BASE STATION**
VERFAHREN UND VORRICHTUNG ZUR MULTIZELLENKONFIGURATION, SPEICHERMEDIUM, ENDGERÄT UND BASISSTATION
PROCÉDÉ ET APPAREIL DE CONFIGURATION DE MULTIPLES CELLULES, SUPPORT DE STOCKAGE, TERMINAL ET STATION DE BASE

(30) Priority: 29.04.2019 CN 201910355752
(43) Date of publication of application: 09.03.2022
(73) Proprietor: Spreadtrum Communications (Shanghai) Co., Ltd., Shanghai 201203 (CN)
(72) Inventor: HAN, Lifeng, Shanghai 201203 (CN)
(74) Representative: Nordmeyer, Philipp Werner
(86) International application number: PCT/CN2020/084381
(87) International publication number: WO 2020/220978

(56) References cited:
- WO-A1-2016/190639
- CN-A- 105 101 388
- CN-A- 105 814 957
- CN-A- 105 917 716
- CN-A- 107 925 959
- US-A1- 2014 056 243
- US-A1- 2016 219 475
- US-A1- 2018 213 452
- HUAWEI ET AL: "Discussion on PDCP duplication in L2 parameters", 3GPP DRAFT; R2-1808423 CLARIFICATION ON PDCP DUPLICATION IN L2 PARAMETER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Busan, Korea; 20180521 - 20180525 11 May 2018 (2018-05-11), XP051519819, Retrieved from the Internet: URL:http://www.3gpp.org/ftp/tsg%5Fran/WG2% 5FRL2/TSGR2%5F102/Docs/R2%2D1808423%2Ezip [retrieved on 2018-05-11]
- INTEL CORPORATION: "Corrections on reestablishment and security procedures", 3GPP TSG-RAN2 Meeting #103, R2-1816019, 12 October 2018 (2018-10-12), XP051525210, DOI: 20200702112914A

## Description

### TECHNICAL FIELD

The present disclosure generally relates to communication technology field, and more particularly, to multi-cell configuration methods.

### BACKGROUND

In the 3rd Generation Partnership Project (3GPP) New Radio (NR) communication systems, an air interface of a User Equipment (UE) includes three states: Radio Resource Control (RRC) IDLE state, RRC INACTIVE state and RRC CONNECTED state.

The LTE in the RRC IDLE state is not connected to a base station (gNB), and merely needs to periodically initiate procedures such as position update, cell selection and reselection, or paging reception. The UE in the RRC CONNECTED state is connected to the network. The network configures for the UE a Radio Bearer (RB), a physical layer, and multi-cell operations including a Dual Connection (DC) operation, a Carrier Aggregation (CA) operation and Multi-RAT Dual Connectivity (MR-DC, refers to an operation of DC transmission through different radio access technologies). Regarding the DC operation, there are intra-frequency scenario and inter-frequency scenario, which are controlled by different base stations in at least two cells. The CA operation is controlled by a single base station in a single cell. The network can perform uplink and downlink data scheduling for the UE in the RRC CONNECTED state.

The UE in the RRC INACTIVE state does not need to notify the base station when moving within a RAN based Notification Area (RNA) of a Radio Access Network (RAN), and the UE reserves a portion of configuration. The UE in the RRC INACTIVE state may reserve configuration such as the Packet Data Convergence Protocol (PDCP) layer or Service Data Adaptation Protocol (SDAP) and some low-layer configuration of a Primary Cell (PCell) in an original serving cell, while low-layer Secondary Cell Group (SCG) configuration is not reserved. In this case, if the network needs to schedule the UE or the LTE has data to transmit, the LTE switches to the RRC CONNECTED state and resumes the reserved configuration for data transmission.

US 2018/213452 A1 discloses a method by a terminal in a wireless communication system. The method includes receiving, from a base station, a paging message for switching a mode of the terminal in an RRC inactive mode to an RRC idle mode, transmitting an RRC message to the base station based on the paging message, receiving an RRC-connection release message (CRR) from the base station, and transitioning from the RRC inactive mode to the RRC idle mode based on the RRC-CRR.

Document US 2016/219475 A1 discloses a control method for supporting multiple connections in a mobile communication system. In the method for supporting the multiple connections to be performed in first and second base stations, a first base station receives the measured results for multiple connections from a terminal, determines whether the plurality of connections are set on the basis of the measured results, transmits the information for setting the multiple connections to the second base station when setting the multiple results, and the second base station generates the control information for setting the multiple connections of the terminal on the basis of the information for setting the multiple connections received from the first base station. Thus, the multiple connections can be easily supported and the performance of the mobile communication system can be improved therethrough.

In some solutions, configuring multi-cell operations for the UE may increase cell resource overhead and cause a resource waste. Therefore, further improvement is needed.

### SUMMARY

Embodiments of the present disclosure provide multi-cell configuration methods.

The invention is set out in the appended set of claims.

In an embodiment of the present disclosure, a multi-cell configuration method performed by a terminal is provided, including: receiving by the terminal, service configuration information, wherein the service configuration information comprises at least one of a report condition of service information of data to be transmitted, candidate cells used for multi-cell operation, configuration information of the candidate cells, and cell public configuration information used for multi-cell operation; transmitting (S401) by the terminal the service information of data to be transmitted, wherein the service information comprises at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold; and receiving (S402) by the terminal multi-cell configuration information, wherein the multi-cell configuration information instructs a User Equipment (LTE) to resume or activate a multi-cell operation, wherein the configuration information of the candidate cells and/or the cell public configuration information used for multi-cell operation comprises at least one of Cell-Radio Network Temporary Identity (C-RNTI), Packet Data Convergence Protocol (PDCP) and Service Data Adaptation Protocol (SDAP) configuration information, low-layer configuration information, random access preamble, a measurement report threshold of the candidate cells, a measurement report threshold of reserved cells, and a cell measurement report threshold used for multi-cell operation, wherein the reserved cells comprise Master Cell Group (MCG) cells and/or Secondary Cell Group (SCG) cells configured for the UE, wherein prior to receiving multi-cell configuration information, the method further comprises: transmitting by the terminal a Physical Cell Identifier (PCI) and/or frequency of the candidate cell whose first measurement result exceeds the measurement report threshold of the candidate cells, wherein the first measurement result refers to a measurement result of the candidate cell; and/or, transmitting by the terminal a PCI and/or frequency of the reserved cell whose second measurement result exceeds the measurement report threshold of the reserved cells, wherein the second measurement result refers to a measurement result of the reserved cell; and/or, transmitting by the terminal a PCI and/or frequency of a cell whose third measurement result exceeds the cell measurement report threshold for multi-cell operation, wherein the third measurement result refers to a measurement result of the cell for multi-cell operation.

In a second aspect, the report condition comprises at least one of a report indicator of the service information, a logical channel identity list, a radio bearer identity list, an access category list, an access identity list, and the preset service amount threshold.

In a third aspect the method additionally comprises : receiving by the terminal timer configuration information, wherein the timer configuration information is used to configure a timer which is configured by a network for the candidate cells and/or the reserved cells, or for all cells in the network, or for a cell group in the network, or for a base station in the network, wherein the reserved cells comprise MCG cells and/or SCG cells configured for the UE.

In a fourth aspect, the method additionally comprises: before the timer expires, reserving by the terminal configuration information of the candidate cells and/ or the reserved cells, or cell public configuration information; and/or, after the timer expires, deleting by the terminal the configuration information of the candidate cells and/or the reserved cells, or the cell public configuration information, and stopping measurement and report of the candidate cells and/or the reserved cells.

In another embodiment, a multi-cell configuration method performed by a base station, is provided comprising: transmitting by the base station service configuration information, wherein the service configuration information comprises at least one of a report condition of service information of data to be transmitted, candidate cells used for multi-cell operation, configuration information of the candidate cells, and cell public configuration information used for multi-cell operation;receiving (S501) by the base station the service information of data to be transmitted, wherein the service information comprises at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold; and transmitting (S502) by the base station multi-cell configuration information, wherein the multi-cell configuration information instructs a User Equipment (LTE) to resume or activate a multi-cell operation,wherein the configuration information of the candidate cells and/or the cell public configuration information used for multi-cell operation comprises at least one of Cell-Radio Network Temporary Identity (C-RNTI), Packet Data Convergence Protocol (PDCP) and Service Data Adaptation Protocol (SDAP) configuration information, low-layer configuration information, random access preamble, a measurement report threshold of the candidate cells, a measurement report threshold of reserved cells, and a cell measurement report threshold used for multi-cell operation, wherein the reserved cells comprise Master Cell Group (MCG) cells and/or Secondary Cell Group (SCG) cells configured for the UE,wherein prior to transmitting multi-cell configuration information, the method further comprises receiving by the base station a Physical Cell Identifier (PCI) and/or frequency of the candidate cell whose first measurement result exceeds the measurement report threshold of the candidate cells, wherein the first measurement result refers to a measurement result of the candidate cell; and/or,receiving by the base station a PCI and/or frequency of the reserved cell whose second measurement result exceeds the measurement report threshold of the reserved cells, wherein the second measurement result refers to a measurement result of the reserved cell; and/or,receiving by the base station a PCI and/or frequency of a cell whose third measurement result exceeds the cell measurement report threshold for multi-cell operation, wherein the third measurement result refers to a measurement result of the cell for multi-cell operation.

In a sixth aspect, the method additionally comprises that the report condition comprises at least one of a report indicator of the service information, a logical channel identity list, a radio bearer identity list, an access category list, an access identity list, and the preset service amount threshold.

In a seventh aspect, the method additionally comprises: transmitting by the base station timer configuration information, wherein the timer configuration information is used to configure a timer which is configured by a network for the candidate cells and/or the reserved cells, or for all cells in the network, or for a cell group in the network, or for a base station in the network, wherein the reserved cells comprise MCG cells and/or SCG cells configured for the UE.

In an eight aspect, the method additionally comprises that prior to transmitting service configuration information, the method further comprises: requesting by the base station service pre-configuration information from a base station in a neighboring cell, wherein the service pre-configuration information comprises at least one of configuration information of the timer, and configuration information of the candidate cells and/or the reserved cells.

In a ninth aspect, the method additionally comprises that following receiving service information of data to be transmitted, the method further comprises: transmitting by the base station activation indication to a base station in a neighboring cell, wherein the activation indication is used to notify the base station in the neighboring cell to activate the service pre-configuration information.

### BRIEF DESCRIPTION OF THE DRAWINGS

FIG. 1 is a flow chart of LTE state switch in prior art;
FIG. 2 is a flow chart of connection reconfiguration in prior art;
FIG. 3 is a flow chart of fast measurement in prior art;
FIG. 4 is a flow chart of a multi-cell configuration method;
FIG. 5 is a flow chart of a multi-cell configuration method;
FIG. 6 is a diagram of signaling interaction in a scenario;
FIG. 7 is a structural diagram of a multi-cell configuration apparatus;
FIG. 8 is a structural diagram of a multi-cell configuration apparatus;

### DETAILED DESCRIPTION

As described in the background, a multi-cell resumption or activation procedure needs to be further improved.

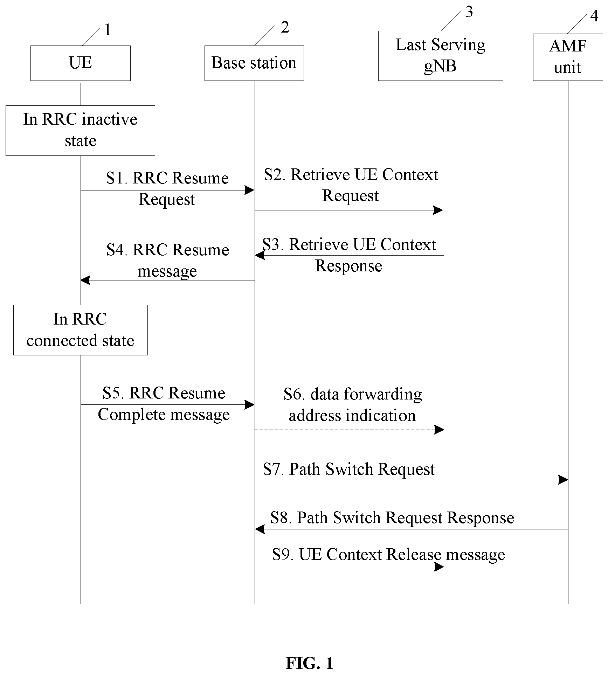

In some solutions, when a UE has data to transmit, a Non Access Stratum (NAS) of the LTE transmits the data to SDAP according to a Protocol Data Unit (PDU) session, the SDAP maps data of a Quality of Service (QoS) flow to a corresponding Data Radio Bearer (DRB) based on configured mapping information. After the transmission is resumed, the data is transmitted to a PDCP layer corresponding to the DRB. Besides, the UE switches from an RRC inactive state to an RRC connected state, and access control is required. The NAS acquires from an Access Stratum (AS) corresponding access category and/or access identity (access ID) based on the data to be transmitted, so as to perform access control and fill in information such as a value of a reason for the access request. A specific process may be referred FIG. 1.

FIG. 1 is a flow chart of LTE state switch in prior art. Referring to FIG. 1, in an initial stage, a LTE 1 is in the RRC inactive state. If the UE 1 has data to transmit, S1 is performed to transmit an RRC Resume Request message to a base station 2. Afterward, after receiving the RRC Resume Request message, the base station 2 performs S2 to transmit a Retrieve UE Context Request message to a last serving base station 3. Afterward, the last serving base station 3 performs S3 to feed back a Retrieve LTE Context Response message to the base station 2. Further, the base station 2 performs S4 to transmit an RRC Resume message to the UE 1. In this manner, the LTE 1 switches to the RRC connected state. Afterward, the LTE 1 performs S5 to transmit an RRC Resume Complete message to the base station 2.

Further, the base station 2 may perform S6 (an optional operation indicated by a dashed line) to transmit data forwarding address indication to the last serving base station 3. Further, the base station 2 may perform S7 to transmit a path switch request to an Access and Mobility Management Function (AMF) unit 4, and perform S8 to receive a path switch request response. Further, the base station 2 may transmit a LTE Context Release message to the last serving base station 3.

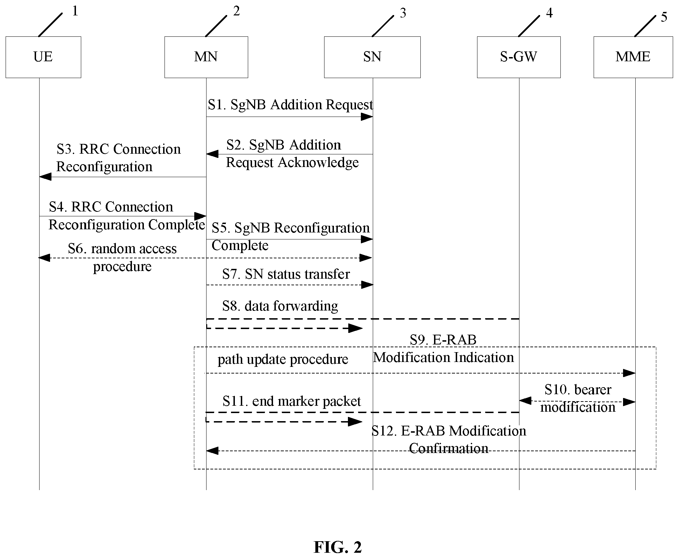

Generally, before configuring multi-cell operation, a Master Node (MN) acquires a measurement result of the UE to determine SCell and PSCell, interacts with a Secondary Node (SN) to complete an SN adding procedure to acquire SCG parameter configuration, and then configures relevant parameters through a reconfiguration procedure. A specific process may be referred to FIG. 2.

FIG. 2 is a flow chart of connection reconfiguration in prior art, where a 4G network is taken as a core network node. Referring to FIG. 2, first, an MN 2 performs S1 to transmit an SgNB Addition Request to an SN 3. Secondly, the MN 2 performs S2 to receive an SgNB Addition Request Acknowledge. Thirdly, the MN 2 performs S3 to transmit RRC Connection Reconfiguration to the UE 1. Afterward, the UE 1 performs S4 to transmit an RRC Connection Reconfiguration Complete message to the MN 2. Further, the MN 2 performs S5 to transmit an SgNB Reconfiguration Complete message to the SN 3.

Further, the UE 1 and the SN 3 perform S6 to execute a random access procedure. Afterward, the MN 2 performs S7 to transmit an SN status transfer to the SN 3. Further, a Service-GateWay (S-GW) 4 performs S8 of data forwarding to forward data of the MN 2 to the SN 3.

Afterward, the MN 2, the SN 3, the S-GW 4, and a Mobility Management Entity (MME) 5 perform a path update procedure. Specifically, the MN 2 performs S9 to transmit an E-UTRAN Radio Access Bearer (E-RAB) modification indication to the MME 5. Afterward, the S-GW 4 and the MME 5 perform S10 to execute bearer modification. The S-GW 4 performs S11 to transmit an end marker packet to the SN 3 via the MN 2. Further, the MME 5 performs S12 to transmit E-RAB Modification Confirmation to the UE 1.

Those skilled in the art could understand that, generally, before configuring multi-cell operation, the MN needs to acquire a measurement result of the LTE to determine SCell and PSCell, and then performs the SN adding procedure with the SN to acquire the SCG parameter configuration, and then configure the relevant parameters through the reconfiguration procedure.

During a switch from the RRC inactive state to the RRC connected state, if the UE PCell does not change, the UE PCell and MCG configuration can be quickly resumed in the RRC Resume message, while SCG configuration cannot be resumed, as the network does not have measurement result information about SCG of the UE at this time, and it is impossible to determine whether the UE has left the PSCell and whether the SCG parameters previously configured in the RRC connected state can be used directly, which causes relatively slow DC configuration.

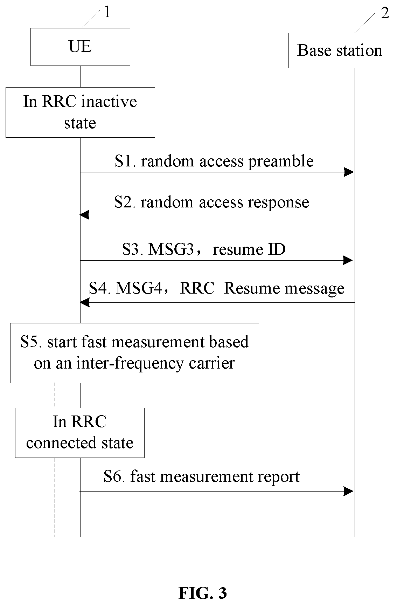

FIG. 3 is a flow chart of fast measurement in prior art. Referring to FIG. 3, when the LTE 1 is in the RRC inactive state and has data to transmit, 1 is performed to transmit a random access preamble to the base station 2. Afterward, the base station 2 performs S2 to transmit a random access response. Further, the LTE 1 performs S3 to transmit Message 3 (MSG3) which may be an RRC resume request (RRC Resume Request or RRC Resume Request 1) message containing a resume ID. Further, the base station 2 performs S4 to transmit Message 4 (MSG4) which may be an RRC Resume message used to trigger the LTE 1 to perform fast measurement. Optionally, MSG4 may carry carrier information for performing fast measurement. Further, the UE 1 performs S5 to start fast measurement based on an inter-frequency carrier. Further, the LTE 1 in the RRC connected state may perform S6 to transmit a fast measurement report to the base station 2.

Besides, in some solutions, a technical solution of fast reporting and configuring DC/CA operation is provided. Specifically, the UE may determine whether PSCell meets a configuration condition for multi-cell operation based on a measurement result. If the PSCell meets the configuration condition for multi-cell operation, the UE may report that the PSCell meets a report threshold or the PSCell can resume DC SCG configuration in an RRC resume request (RRCResumeRequest or RRCResumeRequest1) message. Afterward, the base station may instruct to resume original DC/CA configuration in an RRC resume message. Further, the UE may report more other intra-frequency or inter-frequency cell measurement results in an RRC Resume Complete message based on measurement configuration.

From above, the base station can merely directly configure multi-cell operation based on the measurement results reported by the UE, but there is no service information of the LTE. In fact, some services require multi-cell operation for duplication and transmission to increase reliability, while other services do not require multi-cell operation. When measurement results of some services which do not require multi-cell operation meet a configuration condition for multi-cell operation, if the base station configures multi-cell operation for the UE, a resource waste may be caused. Further, to quickly resume multi-cell operation, a neighboring cell of the PCell needs to reserve resources for the UE, which may increase cell resource overhead and cause a resource waste.

In embodiments of the present disclosure, a multi-cell configuration method is provided, including: transmitting service information of data to be transmitted, wherein the service information includes at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold; and receiving multi-cell configuration information, wherein the multi-cell configuration information instructs a UE to resume or activate a multi-cell operation.

By the embodiments of the present disclosure, the UE reports the service information of the data to be transmitted, so that the base station can acquire more information of the LTE to learn which services of the LTE require multi-cell operation, and whether the data to be transmitted is suitable for multi-cell operation, which is helpful for the network to resume or activate the multi-cell operation. In this manner, the multi-cell operation is resumed or activated more rapidly, thereby effectively reducing a resource waste and saving resource overhead.

In order to clarify the objects, characteristics and advantages of the disclosure, embodiments of present disclosure will be described in detail in conjunction with accompanying drawings.

Embodiments of the present disclosure are applicable to 5G, 4G and 3G communication systems, and various communication systems evolved subsequently.

The embodiments of the present disclosure are also applicable to different network architectures, including but not limited to relay network architecture, dual link network architecture, and Vehicle-to-Everything communication architecture.

A base station in the embodiments of the present disclosure may also be referred to as a base station equipment, and is a device deployed in a wireless access network to provide wireless communication functions. For example, an equipment that provides a base station function in a 2G network includes a Base Transceiver Station (BTS) and a Base Station Controller (BSC). An equipment that provides the base station function in a 3G network includes a Node B and a Radio Network Controller (RNC). An equipment that provides the base station function in a 4G network includes an evolved node B (eNB). In a Wireless Local Area Network (WLAN), an equipment that provides the base station function is an Access Point (AP). An equipment that provides the base station function in a 5G New Radio (NR) includes gNB. And the base station also refers to an equipment that provides the base station function in a new communication system in the future.

A terminal (a sending terminal and/or a receiving terminal) in the embodiments of the present disclosure may refer to various forms of User Equipment (UE), access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure.

It should be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The "connection" in the embodiments of the present disclosure refers to various connection ways such as direct connection or indirect connection to realize communication between devices, which is not limited in the embodiments of the present disclosure.

The "network" and "system" in the embodiments of the present disclosure refer to a same concept, and a communication system is a communication network.

The multi-cell operation in the embodiments of the present disclosure includes but is not limited to DC operation, CA operation and MR-DC operation.

Hereinafter, various embodiments of the present disclosure are described in detail with reference to accompanying drawings. Flow charts and block diagrams in the drawings illustrate possible implementation architecture, functions and operations of the methods and systems provided in various embodiments of the present disclosure. It should be noted that each block in the flow charts or the block diagrams may represent a module, a program segment, or a portion of a code, which may include one or more executable instructions for implementing logical functions defined in the various embodiments. It should also be noted that, in some alternative embodiments, functions illustrated in the block may occur in a different order from an order illustrated in the drawings. For example, two blocks shown in succession may actually be performed substantially in parallel, or in a reverse order, which depends on functions involved. It should also be noted that each block in the flow charts and/or the block diagrams, and a combination of the blocks in the flow charts and/or the block diagrams can be implemented using a dedicated hardware-based system that performs specified functions or operations, or using a combination of dedicated hardware and computer instructions. It should also be noted that sequence numbers of steps in the flow charts do not limit an order of the steps.

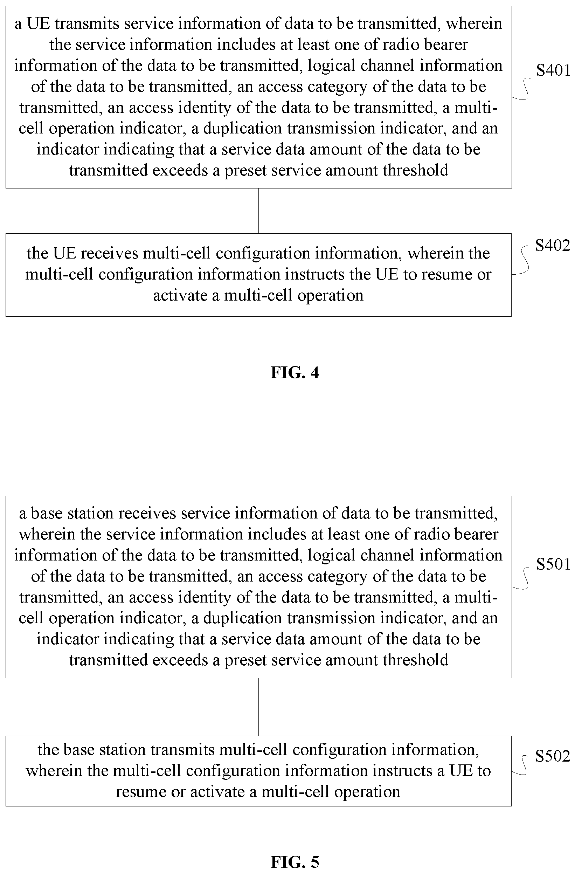

FIG. 4 is a flow chart of a multi-cell configuration method according to an embodiment. The method may be applied at a UE side, for example, performed by a NR UE, and may include S401 and S402.

In S401, a UE transmits service information of data to be transmitted, wherein the service information includes at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold.

In S402, the UE receives multi-cell configuration information, wherein the multi-cell configuration information instructs the UE to resume or activate a multi-cell operation.

In some embodiments, the data to be transmitted may include not only service data, but also signaling data from NAS or AS.

In some embodiments, a network (for example, a base station) may transmit service configuration information to the LTE. The service configuration information includes at least one of a report condition of the service information, candidate cells used for multi-cell operation, configuration information of the candidate cells, and cell public configuration information used for multi-cell operation.

In some embodiments, the service information includes at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold.

The radio bearer information may include Data Radio Bearer identity (DRB ID) or Signaling Radio Bearer (SRB) information.

For new data where DRB has not been established in the LTE, there is no available DRB information to report. Therefore, in this case, the access category and/or access identity information provided by the NAS may be used to characterize whether the new data has a high priority or high reliability transmission requirements. The network may determine whether to configure multi-cell operation based on the access category and/or access identity information of the new data.

In some embodiments, the report condition of the service information includes at least one of a report indicator of the service information, a logical channel identity list, a radio bearer identity list, an access category list, an access identity list, and the preset service amount threshold. In practice, the UE may compare a service data amount of the data to be transmitted with the preset service amount threshold.

In some embodiments, the configuration information of the candidate cells includes at least one of C-RNTI, PDCP and SDAP configuration information, low-layer configuration information, random access preamble, a measurement report threshold of the candidate cells, a measurement report threshold of reserved cells, and a cell measurement report threshold used for multi-cell operation, where the reserved cells include MCG cells and/or SCG cells configured for the UE.

In some embodiments, the cell public configuration information used for multi-cell operation includes at least one of C-RNTI, PDCP and SDAP configuration information, low-layer configuration information, random access preamble, a measurement report threshold of the candidate cells, a measurement report threshold of reserved cells, and a cell measurement report threshold used for multi-cell operation.

It should be noted that the measurement report threshold of the candidate cells, the measurement report threshold of the reserved cells, and the cell measurement report threshold for multi-cell operation may be the same or different.

Afterward, the LTE may receive the service configuration information. In some embodiments, the UE may receive the service configuration information based on an RRC release message.

In some embodiments, the UE may measure the candidate cells to acquire first measurement results, and select, based on the first measurement results, a candidate cell whose first measurement result exceeds the measurement report threshold of the candidate cells.

In some embodiments, the UE may measure the reserved cells to acquire second measurement results, and select, based on the second measurement results, a reserved cell whose second measurement result exceeds the measurement report threshold of the reserved cells.

In some embodiments, the UE may measure the cells used for multi-cell operation to acquire third measurement results, and select, based on the third measurement results, a cell whose third measurement result exceeds the cell measurement report threshold for multi-cell operation.

Afterward, the UE may transmit to the base station a Physical Cell Identifier (PCI) and/or frequency of the candidate cell whose first measurement result exceeds the measurement report threshold of the candidate cells. And/or, the UE may transmit to the base station a PCI and/or frequency of the reserved cell whose second measurement result exceeds the measurement report threshold of the reserved cells. And/or, the UE may transmit to the base station a PCI and/or frequency of the cell whose third measurement result exceeds the cell measurement report threshold for multi-cell operation.

Further, the UE may determine the service information of the data to be transmitted based on the service configuration information. Afterward, in S401, the UE may transmit the service information of the data to be transmitted to the base station. After receiving the service information, the base station may generate multi-cell configuration information based on the service information to instruct the LTE to resume or activate multi-cell operation. That is, the multi-cell configuration information is generated by the base station based on the service information to instruct the LTE to resume or activate the multi-cell operation.

Afterward, the base station may transmit the multi-cell configuration information. The LTE may receive the multi-cell configuration information in S402, and may resume or activate multi-cell operation based on the multi-cell configuration information.

In some embodiments, the base station may configure timer configuration information for the LTE. The timer configuration information may be used to configure a timer that is configured by the base station for the candidate cells and/or reserved cells, or configured for all cells in the network, or configured for a cell group in the network, or configured for a base station in the network.

After receiving the timer configuration information, the UE may process the configuration information of the candidate cells and/or the reserved cells or the cell public configuration information based on whether the timer expires. For example, the UE may reserve the configuration information of the candidate cells and/or the reserved cells or the cell public configuration information before the timer expires.

Further, the UE may delete the configuration information of the candidate cells and/or the reserved cells or the cell public configuration information after the timer expires, and stop measurement and report of the candidate cells and/or the reserved cells.

FIG. 5 is a flow chart of a multi-cell configuration method according to an embodiment. The method may be applied at a network side, i.e., performed by a network side (for example, a base station), and may include S501 and S502.

In S501, a base station receives service information of data to be transmitted, wherein the service information includes at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold.

In S502, the base station transmits multi-cell configuration information, wherein the multi-cell configuration information instructs a UE to resume or activate a multi-cell operation.

Specifically, the base station may transmit service configuration information to the UE. In some embodiments, the base station may transmit the service configuration information to the UE through an RRC release message. The service configuration information includes at least one of a report condition of the service information, candidate cells used for multi-cell operation, configuration information of the candidate cells, and cell public configuration information used for multi-cell operation.

In some embodiments, the report condition of the service information includes at least one of a report indicator of the service information, a logical channel identity list, a radio bearer identity list, an access category list, an access identity list, and the preset service amount threshold.

In some embodiments, the configuration information of the candidate cells includes at least one of C-RNTI, PDCP and SDAP configuration information, low-layer configuration information, random access preamble, a measurement report threshold of the candidate cells, a measurement report threshold of reserved cells, and a cell measurement report threshold used for multi-cell operation, where the reserved cells include MCG cells and/or SCG cells configured for the UE.

In some embodiments, the cell public configuration information used for multi-cell operation includes at least one of C-RNTI, PDCP and SDAP configuration information, low-layer configuration information, random access preamble, a measurement report threshold of the candidate cells, a measurement report threshold of reserved cells, and a cell measurement report threshold used for multi-cell operation.

Afterward, the LTE may transmit to the network the service information of the data to be transmitted based on the service configuration information. In some embodiments, the service information includes at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold.

In some embodiments, the LTE transmits to the base station PCI and/or frequency of the candidate cell whose first measurement result exceeds the measurement report threshold of the candidate cells, wherein the first measurement result refers to a measurement result of the candidate cell; and/or, transmits to the base station PCI and/or frequency of the reserved cell whose second measurement result exceeds the measurement report threshold of the reserved cells, wherein the second measurement result refers to a measurement result of the reserved cell; and/or, transmits to the base station PCI and/or frequency of a cell whose third measurement result exceeds the cell measurement report threshold for multi-cell operation, wherein the third measurement result refers to a measurement result of the cell for multi-cell operation. Those skilled in the art could understand that, in some embodiments, the PCI and/or the frequency may be transmitted to the base station together with the service information, or independently of the service information.

Accordingly, the base station receives the PCI and/or the frequency of the candidate cell whose first measurement result exceeds the measurement report threshold of the candidate cells; and/or, receives the PCI and/or the frequency of the reserved cell whose second measurement result exceeds the measurement report threshold of the reserved cells; and/or, receives the PCI and/or the frequency of the cell whose third measurement result exceeds the cell measurement report threshold for multi-cell operation.

In S501, the base station receives the service information.

In S502, the base station transmits the multi-cell configuration information, wherein the multi-cell configuration information is generated based on the service information, and instructs the LTE to resume or activate a multi-cell operation. In some embodiments, the base station transmits the multi-cell configuration information in an RRC resume message.

In some embodiments, the base station may generate and transmit timer configuration information which is used to configure a timer that is configured by the network (for example, a core network, an operator or the base station) for the candidate cells and/or reserved cells, or configured for all cells in the network, or configured for a cell group in the network, or configured for a base station in the network.

In some embodiments, prior to transmitting service configuration information, the method further includes: requesting service pre-configuration information from a base station in a neighboring cell. The service pre-configuration information includes at least one of configuration information of the timer, and configuration information of the candidate cells and/or the reserved cells. The base station in the neighboring cell includes base stations in the network other than the base station to which the PCell of the UE belongs, wherein cells where the UE can perform channel measurement and is not camped on belong to these base stations; or includes base stations to which neighboring cells of the PCell and cells where multi-cell operation is configured belong; or includes a base station to which the SCG belongs. The base station to which the PCell of the UE belongs is a serving base station.

In some embodiments, following receiving service information of data to be transmitted, the base station transmits activation indication to the base station in the neighboring cell, wherein the activation indication is used to notify the base station in the neighboring cell to activate the service pre-configuration information.

The above methods are described in detail with specific embodiments below.

In following embodiments, a LTE reports service information to assist a network in resuming or activating a multi-cell operation configuration.

Before resuming or activating the multi-cell operation, the UE may carry an RRC Resume Request message or an RRC Resume Request 1 message in MSG3 to report information corresponding to uplink data to be transmitted, for example, RB information, access category and/or access identity information, a multi-cell operation indicator, a duplication transmission indicator, and/or an indicator indicating that a service data amount of the data to be transmitted exceeds a preset service amount threshold. The RB information may include DRB ID and/or SRB ID information. The duplication transmission refers to repeated transmission of the same data in two or more cells (or carriers). The multi-cell operation indicator indicates that the network can perform a multi-cell operation. The duplication transmission indicator indicates that the network can perform duplication transmission.

For new services where DRB has not been established, there is no available DRB information to report. Therefore, in this case, the access category and/or access identity information provided by the NAS may be used to characterize whether the new services have a high priority or high reliability transmission requirements. The network may determine whether to activate the multi-cell operation based on the access category and/or access identity information of the new services.

In some embodiments, reporting the service information by the UE is determined based on a report condition pre-configured by the network.

In some embodiments, the network may generate the service configuration information before the LTE reports the service information. The service configuration information includes at least one of a report condition of the service information, candidate cells used for multi-cell operation, configuration information of the candidate cells, and cell public configuration information used for multi-cell operation.

In some embodiments, the network may transmit the service configuration information in an RRC release message. The report condition of the service information includes at least one of a report indicator of the service information, a logical channel identity list, a radio bearer identity list, an access category list, an access identity list, and the preset service amount threshold. If the data to be transmitted is associated with or meets at least one of the logical channel identity list, the radio bearer identity list, the access category list, and the access identity list, the UE may configure the multi-cell operation indicator or the duplication transmission indicator to be true.

Further, a serving base station of the LTE may provide not only information about MCG cells and/or SCG cells (called reserved cells) currently configured for the UE, but also candidate cells and configuration information of the candidate cells. The configuration information of the candidate cells or the cell public configuration information used for multi-cell operation includes at least one of C-RNTI, PDCP and SDAP configuration information, low-layer (RLC layer, MAC layer, or physical layer) configuration information, a random access preamble, a measurement report threshold of the candidate cells, a measurement report threshold of reserved cells, and a cell measurement report threshold used for multi-cell operation. Each cell may be configured with one C-RNTI. Cells used for multi-cell operation may include reserved cells and/or candidate cells.

Based on the measurement report threshold and/or the cell measurement report threshold, the UE is allowed to configure these cells as PSCells or SCells. When reporting the service information, the LTE may further report the PCI and/or frequency of the candidate cell that meet the corresponding threshold, and/or the PCI and/or frequency of the reserved cells that meet the corresponding threshold, and/or the PCI and/or frequency of the cells for multi-cell operation that meet the cell measurement report threshold.

Further, for SCG and/or MCG configuration of the reserved cells, or reserved candidate cell configuration, a timer may be configured. The timer may be a cell-based timer, a network-based timer, an MCG or SCG-based timer, or a base station-based timer. Before the timer expires, the UE may retain relevant configuration information. If the timer expires, the relevant configuration information may be deleted, and measurement or report of the cells may stop.

Before configuring the candidate cells or instructing the UE to reserve the MCG/SCG configuration (for example, before issuing an RRC release message), the base station may perform a service pre-configuration information exchange procedure with the base station in the neighboring cell to acquire the configuration information and/or the timer information of the candidate cells or the reserved cells. After the UE reports the service information, and/or after acquiring information of the candidate cells and/or reserved cells that meet the measurement report threshold, and/or after acquiring information of the cells for multi-cell operation, the base station may directly transmit activation indication to the base station in the neighboring cell, so as to activate the pre-configuration information to accelerate a multi-cell operation resumption procedure.

After receiving the service information, and/or the candidate cells and/or the reserved cells and/or the cells for multi-cell operation that meet the corresponding measurement report threshold, the network may instruct the UE to resume or activate the multi-cell operation in an RRC resume message, to realize multi-cell operation or duplication transmission for specific data to be transmitted or DRB.

In some embodiments, the network (for example, the base station) may interact with the base station in the neighboring cell about cells activated by the UE and/or configuration information before transmitting the service configuration information, to notify that relevant configuration has been activated. Compared with configuration information that needs to be exchanged in existing solutions, a resumption or activation time of multi-cell operation may be reduced, and a time required for multi-cell configuration may be reduced.

After transmitting the RRC resume message or the service information of the data to be transmitted, the LTE may perform data duplication transmission based on multi-cell operation following a random access procedure in the SCell or PSCell (if necessary).

In following embodiments, a UE automatically resumes or activates a multi-cell operation based on pre-configuration of a network when a preset condition is met.

In some embodiments, the network may carry the service configuration information in an RRC release message. The service configuration information includes at least one of a condition for automatically resuming or activating multi-cell operation, candidate cells for multi-cell operation, configuration information of the candidate cells, cell public configuration information for multi-cell operation, a PSCell candidate list. The condition for automatically resuming or activating multi-cell operation may include at least one of an indicator for automatically resuming or activating multi-cell operation, a logical channel identifier list, a radio bearer identity list, an access category list, an access identity list, the preset service amount threshold.

Further, the configuration information of the candidate cells or the cell public configuration information may include at least one of C-RNTI, PDCP and SDAP configuration information, low-layer configuration information, a random access preamble, a measurement report threshold of the candidate cells, a measurement report threshold of reserved cells, and a cell measurement report threshold used for multi-cell operation.

If there are one or more cells that meet the measurement report threshold or the cell measurement report threshold, the LTE may configure the cell as a PSCell or an SCell.

Further, if the service configuration information includes the PScell candidate list, and multiple cells meet the measurement report threshold or the cell measurement report threshold, a cell in the PScell candidate list is selected as the PScell. Otherwise, any one cell that meets the threshold is selected as the PScell.

Further, for cell public configuration information of the reserved cells (such as SCG cells and/or MCG cells), the candidate cells or the cells for multi-cell operation, a timer may be configured. The timer may be a cell-based timer, a network-based timer, an MCG or SCG-based timer, or a base station-based timer. Before the timer expires, the UE may retain relevant configuration information. If the timer expires, the relevant configuration information may be deleted, and measurement or report of the cells may stop.

Further, the UE determines whether a configuration condition for multi-cell operation is met based on a measurement result and triggering status transition service information. If the condition is met, the multi-cell operation configuration is completed and the duplication transmission of the data to be transmitted is activated based on the service configuration information. Determining based on the triggering status transition service information includes: if the data to be transmitted initiated by the UE is associated with or meets at least one of the logical channel identity list, the radio bearer identity list, the access category list, and the access identity list, or an amount of the data to be transmitted initiated by the UE is equal to or greater than the preset service amount threshold, the LTE determining that the condition for automatic resumption or activation of multi-cell operation is met.

Further, the UE may notify an MN in the RRC Resume Complete message that the resumption or activation of multi-cell operation is complete, and start multi-cell transmission and/or duplication transmission after the SCell or PSCell completes a random access procedure (if necessary). Alternatively, the multi-cell transmission and/or duplication transmission may be started after transmitting to an SN indication information indicating that the multi-cell operation activation is completed. The indication information indicating that the multi-cell operation activation is completed may be indication or information transmitted during the random access procedure. Alternatively, multi-cell transmission and/or duplication transmission may be started based on the random access procedure.

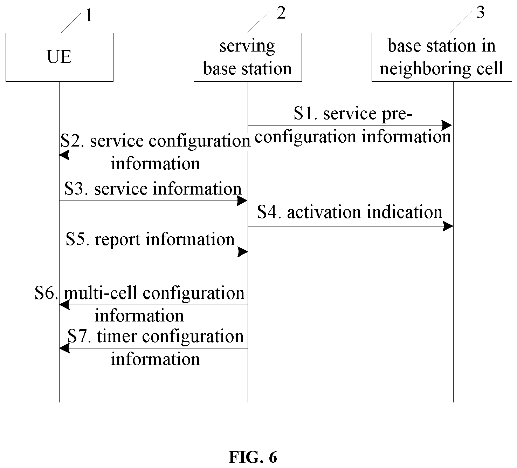

FIG. 6 is a diagram of signaling interaction in a scenario according to an embodiment. Referring to FIG. 6, a serving base station 2 performs S 1 to transmit service pre-configuration information to a base station 3 in a neighboring cell. The service pre-configuration information may include at least one of timer configuration information, and configuration information of the candidate cells and/or the reserved cells, where the reserved cells include the MCG cells and/or SCG cells configured for the UE.

Afterward, the serving base station 2 may perform S2 to transmit service configuration information to a LTE 1. The service configuration information may include at least one of a report condition of the service information, candidate cells used for multi-cell operation, configuration information of the candidate cells, and cell public configuration information used for multi-cell operation.

Further, the UE 1 may perform S3 to transmit service information of the data to be transmitted to the serving base station 2. The service information may include at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold.

Further, after receiving the service information, the serving base station 2 may perform S4 to transmit activation indication to the base station 3 in the neighboring cell. The activation indication may be used to notify the base station 3 in the neighboring cell to activate the service pre-configuration information.

Further, after receiving the service configuration information, the UE 1 may perform S5 to transmit report information acquired based on the measurement result to the serving base station 2. The report information may include: PCI and/or frequency of the candidate cell whose measurement result exceeds the measurement report threshold of the candidate cells; and/or PCI and/or frequency of the reserved cell whose measurement result exceeds the measurement report threshold of the reserved cells; and/or PCI and/or frequency of the cell whose measurement result exceeds the cell measurement report threshold of multi-cell operation.

Further, the serving base station 2 may perform S6 to transmit multi-cell configuration information to the LTE 1, where the multi-cell configuration information may be used to instruct the LTE to resume or activate the multi-cell operation.

Further, the serving base station 2 may perform S7 to transmit timer configuration information to the UE 1. The timer configuration information may be used to configure a timer, and the timer may be configured by a network (for example, a core network, an operator, or the base station) for the candidate cells and/or the reserved cells, or for all cells in the network, or for a cell group in the network, or for a base station in the network.

Further, the UE 1 may reserve configuration information of the candidate cells and/or the reserved cells or the cell public configuration information (not shown in the drawings) before the timer expires. After the timer expires, the configuration information of the candidate cells and/or the reserved cells or the cell public configuration information is deleted, and measurement and report of the candidate cells and/or the reserved cells may stop (not shown in the drawings).

From above, with the embodiments of the present disclosure, the network may resume or configure multi-cell operation earlier based on the information reported by the UE, and unnecessary multi-cell configuration may be avoided, thereby saving resource overhead. Alternatively, according to the pre-configuration information from the network, the UE may perform data transmission based on the multi-cell operation when there are cells meeting the configuration condition of the multi-cell operation, which may also save resource overhead.

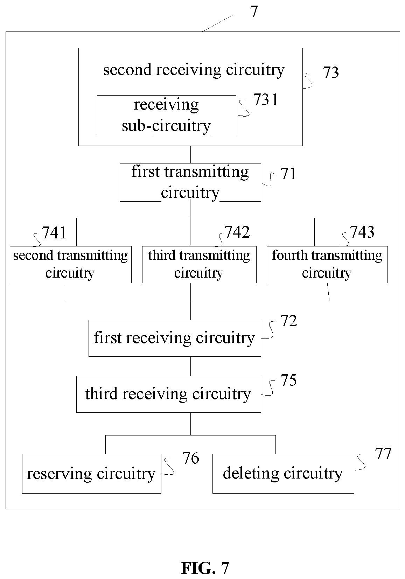

Referring to FIG. 7, FIG. 7 is a structural diagram of a multi-cell configuration apparatus according to an embodiment. The apparatus 7 may be applied to a terminal side, such as an NR UE, and perform the method as shown in FIGS. 4 and 6.

The multi-cell configuration apparatus 7 includes: a first transmitting circuitry 71 configured to transmit service information of data to be transmitted, wherein the service information includes at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold; and a first receiving circuitry 72 configured to receive multi-cell configuration information, wherein the multi-cell configuration information instructs a LTE to resume or activate a multi-cell operation.

In some embodiments, the multi-cell configuration apparatus 7 further includes a second receiving circuitry 73 configured to receive service configuration information before the service information of data to be transmitted is transmitted, wherein the service configuration information includes at least one of a report condition of the service information, candidate cells used for multi-cell operation, configuration information of the candidate cells, and cell public configuration information used for multi-cell operation.

In some embodiments, the second receiving circuitry 73 includes a receiving sub-circuitry 731 configured to receive the service configuration information in an RRC release message.

In some embodiments, the report condition includes at least one of a report indicator of the service information, a logical channel identity list, a radio bearer identity list, an access category list, an access identity list, and the preset service amount threshold.

In some embodiments, the configuration information of the candidate cells and/or the cell public configuration information used for multi-cell operation includes at least one of C-RNTI, PDCP and SDAP configuration information, low-layer configuration information, random access preamble, a measurement report threshold of the candidate cells, a measurement report threshold of reserved cells, and a cell measurement report threshold used for multi-cell operation, wherein the reserved cells include MCG cells and/or SCG cells configured for the UE.

In some embodiments, the multi-cell configuration apparatus 7 further includes: a second transmitting circuitry 741 configured to transmit PCI and/or frequency of the candidate cell whose first measurement result exceeds the measurement report threshold of the candidate cells, wherein the first measurement result refers to a measurement result of the candidate cell; and/or, a third transmitting circuitry 742 configured to transmit PCI and/or frequency of the reserved cell whose second measurement result exceeds the measurement report threshold of the reserved cells, wherein the second measurement result refers to a measurement result of the reserved cell; and/or, a fourth transmitting circuitry 743 configured to transmit PCI and/or frequency of a cell whose third measurement result exceeds the cell measurement report threshold for multi-cell operation, wherein the third measurement result refers to a measurement result of the cell for multi-cell operation.

In some embodiments, the multi-cell configuration apparatus 7 further includes a third receiving circuitry 75 configured to receive timer configuration information, wherein the timer configuration information is used to configure a timer which is configured by a network for the candidate cells and/or the reserved cells, or for all cells in the network, or for a cell group in the network, or for a base station in the network, wherein the reserved cells include MCG cells and/or SCG cells configured for the UE.

In some embodiments, the multi-cell configuration apparatus 7 further includes: a reserving circuitry 76 configured to reserve configuration information of the candidate cells and/or the reserved cells, or cell public configuration information before the timer expires; and/or, a deleting circuitry 77 configured to delete the configuration information of the candidate cells and/or the reserved cells, or the cell public configuration information after the timer expires, and stop measurement and report of the candidate cells and/or the reserved cells.

More details of working principles and working modes of the multi-cell configuration apparatus 7 can be found in the above descriptions of FIGS. 4 and 6, and are not described here.

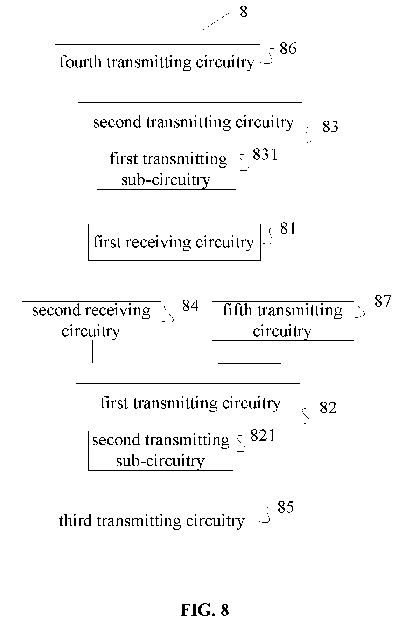

FIG. 8 is a structural diagram of a multi-cell configuration apparatus according to an embodiment. The apparatus 8 may be applied to a network side, such as an NR base station, and perform the method as shown in FIGS. 5 and 6.

The multi-cell configuration apparatus 8 includes: a first receiving circuitry 81 configured to receive service information of data to be transmitted, wherein the service information includes at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold; and a first transmitting circuitry 82 configured to transmit multi-cell configuration information, wherein the multi-cell configuration information instructs a LTE to resume or activate a multi-cell operation.

In some embodiments, the multi-cell configuration apparatus 8 further includes a second transmitting circuitry 83 configured to transmit service configuration information before the service information of the data to be transmitted is received, wherein the service configuration information includes at least one of a report condition of the service information, candidate cells used for multi-cell operation, configuration information of the candidate cells, and cell public configuration information used for multi-cell operation.

In some embodiments, the second transmitting circuitry 83 includes a first transmitting sub-circuitry 831 configured to transmit the service configuration information in an RRC release message.

In some embodiments, the report condition includes at least one of a report indicator of the service information, a logical channel identity list, a radio bearer identity list, an access category list, an access identity list, and the preset service amount threshold.

In some embodiments, the configuration information of the candidate cells and/or the cell public configuration information used for multi-cell operation includes at least one of C-RNTI, PDCP and SDAP configuration information, low-layer configuration information, random access preamble, a measurement report threshold of the candidate cells, a measurement report threshold of reserved cells, and a cell measurement report threshold used for multi-cell operation, wherein the reserved cells include MCG cells and/or SCG cells configured for the UE.

In some embodiments, the multi-cell configuration apparatus 8 further includes a second receiving circuitry 84 configured to: before the multi-cell configuration information is transmitted, receive PCI and/or frequency of the candidate cell whose first measurement result exceeds the measurement report threshold of the candidate cells, wherein the first measurement result refers to a measurement result of the candidate cell; and/or, receive PCI and/or frequency of the reserved cell whose second measurement result exceeds the measurement report threshold of the reserved cells, wherein the second measurement result refers to a measurement result of the reserved cell; and/or, receive PCI and/or frequency of a cell whose third measurement result exceeds the cell measurement report threshold for multi-cell operation, wherein the third measurement result refers to a measurement result of the cell for multi-cell operation.

In some embodiments, the multi-cell configuration apparatus 8 further includes a third transmitting circuitry 85 configured to transmit timer configuration information, wherein the timer configuration information is used to configure a timer which is configured by a network for the candidate cells and/or the reserved cells, or for all cells in the network, or for a cell group in the network, or for a base station in the network, wherein the reserved cells include MCG cells and/or SCG cells configured for the UE.

In some embodiments, the multi-cell configuration apparatus 8 further includes a fourth transmitting circuitry 86 configured to request service pre-configuration information from a base station in a neighboring cell before the service configuration information is transmitted, wherein the service pre-configuration information includes at least one of configuration information of the timer, and configuration information of the candidate cells and/or the reserved cells.

In some embodiments, the multi-cell configuration apparatus 8 further includes a fifth transmitting circuitry 87 configured to transmit activation indication to a base station in a neighboring cell after the service information of the data to be transmitted is received, wherein the activation indication is used to notify the base station in the neighboring cell to activate the service pre-configuration information.

In some embodiments, the first transmitting circuitry 82 may include a second transmitting sub-circuitry 821 configured to transmit the multi-cell configuration information in an RRC resume message.

More details of working principles and working modes of the multi-cell configuration apparatus 8 can be found in the above descriptions of FIGS. 5 and 6, and are not described here.

In an embodiment of the present disclosure, a storage medium having computer instructions stored therein is provided, wherein when the computer instructions are executed, any one of the above methods as shown in FIGS. 4 to 6 is performed. In some embodiments, the storage medium may be a computer readable storage medium, such as a non-volatile memory or a non-transitory memory. The computer readable storage medium may include a Read Only Memory (ROM), a Random Access Memory (RAM), a magnetic disk or an optical disk.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a ROM, a Programmable ROM (PROM), an Erasable PROM (EPROM), an electrically Erasable EPROM (EEPROM), or a flash memory. The volatile memory may be a RAM which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general-purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire (e.g., infrared, wireless, microwave and etc.). The computer readable storage medium may be any available medium that can be accessed by a computer or a data storage device such as a server or a data center that contains one or more sets of available media. The available medium may be a magnetic medium (e.g., floppy disk, hard disk or magnetic tape), an optical medium (e.g., DVD), or a semiconductor medium. The semiconductor medium may be a solid disk.

In an embodiment of the present disclosure, a terminal including a memory and a processor is provided, wherein the memory has computer instructions stored therein, and when the processor executes the computer instructions, the method as shown in FIGS. 4 and 6 is performed. The terminal may be an NR UE.

In an embodiment of the present disclosure, a base station including a memory and a processor is provided, wherein the memory has computer instructions stored therein, and when the processor executes the computer instructions, the method as shown in FIGS. 5 and 6 is performed. The terminal may be an NR base station.

Although the present disclosure has been disclosed above with reference to preferred embodiments thereof, it should be understood that the disclosure is presented by way of example only, and not limitation. Those skilled in the art can modify and vary the embodiments without departing from the scope of protection, as defined by the claims.

## Claims

1. A multi-cell configuration method, comprising
receiving by a terminal service configuration information, wherein the service configuration information comprises at least one of a report condition of service information of data to be transmitted, candidate cells used for multi-cell operation, configuration information of the candidate cells, and cell public configuration information used for multi-cell operation;
transmitting based on the report condition (S401) by the terminal the service information of data to be transmitted, wherein the service information comprises at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold; and
receiving (S402) by the terminal multi-cell configuration information, wherein the multi-cell configuration information instructs the terminal to resume or activate a multi-cell operation,
wherein the configuration information of the candidate cells and/or the cell public configuration information used for multi-cell operation comprises at least one of Cell-Radio Network Temporary Identity, C-RNTI, Packet Data Convergence Protocol, PDCP, and Service Data Adaptation Protocol, SDAP, configuration information, low-layer configuration information, random access preamble, a measurement report threshold of the candidate cells, a measurement report threshold of reserved cells, and a cell measurement report threshold used for multi-cell operation, wherein the reserved cells comprise Master Cell Group, MCG, cells and/or Secondary Cell Group, SCG, cells configured for the UE,
wherein prior to receiving multi-cell configuration information, the method further comprises:
transmitting by the terminal a Physical Cell Identifier, PCI, and/or frequency of the candidate cell whose first measurement result exceeds the measurement report threshold of the candidate cells, wherein the first measurement result refers to a measurement result of the candidate cell; and/or,
transmitting by the terminal a PCI and/or frequency of the reserved cell whose second measurement result exceeds the measurement report threshold of the reserved cells, wherein the second measurement result refers to a measurement result of the reserved cell; and/or,
transmitting by the terminal a PCI and/or frequency of a cell whose third measurement result exceeds the cell measurement report threshold for multi-cell operation, wherein the third measurement result refers to a measurement result of the cell for multi-cell operation.

2. The method according to claim 1, wherein, the report condition comprises at least one of a report indicator of the service information, a logical channel identity list, a radio bearer identity list, an access category list, an access identity list, and the preset service amount threshold.

3. The method according to claim 1, further comprising receiving by the terminal timer configuration information, wherein the timer configuration information is used to configure a timer which is configured by a network for the candidate cells and/or the reserved cells, or for all cells in the network, or for a cell group in the network, or for a base station in the network, wherein the reserved cells comprise MCG cells and/or SCG cells configured for the terminal.

4. The method according to claim 3, further comprising
before the timer expires, reserving by the terminal configuration information of the candidate cells and/or the reserved cells, or cell public configuration information; and/or,
after the timer expires, deleting by the terminal the configuration information of the candidate cells and/or the reserved cells, or the cell public configuration information, and stopping measurement and report of the candidate cells and/or the reserved cells.

5. A multi-cell configuration method, comprising
transmitting by a base station service configuration information to a terminal, wherein the service configuration information comprises at least one of a report condition of service information of data to be transmitted, candidate cells used for multi-cell operation, configuration information of the candidate cells, and cell public configuration information used for multi-cell operation;
receiving (S501) by the base station the service information of data to be transmitted from the terminal, wherein the service information comprises at least one of radio bearer information of the data to be transmitted, logical channel information of the data to be transmitted, an access category of the data to be transmitted, an access identity of the data to be transmitted, a multi-cell operation indicator, a duplication transmission indicator, and an indicator indicating that a service data amount of the data to be transmitted exceeds a preset service amount threshold; and
transmitting (S502) by the base station multi-cell configuration information, wherein the multi-cell configuration information instructs the terminal to resume or activate a multi-cell operation,
wherein the configuration information of the candidate cells and/or the cell public configuration information used for multi-cell operation comprises at least one of Cell-Radio Network Temporary Identity, C-RNTI, Packet Data Convergence Protocol, PDCP, and Service Data Adaptation Protocol, SDAP, configuration information, low-layer configuration information, random access preamble, a measurement report threshold of the candidate cells, a measurement report threshold of reserved cells, and a cell measurement report threshold used for multi-cell operation, wherein the reserved cells comprise Master Cell Group, MCG, cells and/or Secondary Cell Group, SCG, cells configured for the terminal,
wherein prior to transmitting multi-cell configuration information, the method further comprises:
receiving by the base station a Physical Cell Identifier, PCI, and/or frequency of the candidate cell whose first measurement result exceeds the measurement report threshold of the candidate cells, wherein the first measurement result refers to a measurement result of the candidate cell; and/or,
receiving by the base station a PCI and/or frequency of the reserved cell whose second measurement result exceeds the measurement report threshold of the reserved cells, wherein the second measurement result refers to a measurement result of the reserved cell; and/or,
receiving by the base station a PCI and/or frequency of a cell whose third measurement result exceeds the cell measurement report threshold for multi-cell operation, wherein the third measurement result refers to a measurement result of the cell for multi-cell operation.

6. The method according to claim 5, wherein, the report condition comprises at least one of a report indicator of the service information, a logical channel identity list, a radio bearer identity list, an access category list, an access identity list, and the preset service amount threshold.

7. The method according to claim 5, further comprising transmitting by the base station timer configuration information, wherein the timer configuration information is used to configure a timer which is configured by a network for the candidate cells and/or the reserved cells, or for all cells in the network, or for a cell group in the network, or for a base station in the network, wherein the reserved cells comprise MCG cells and/or SCG cells configured for the terminal.

8. The method according to claim 7, wherein, prior to transmitting service configuration information, the method further comprises:
requesting by the base station service pre-configuration information from a base station in a neighboring cell, wherein the service pre-configuration information comprises at least one of configuration information of the timer, and configuration information of the candidate cells and/or the reserved cells.

9. The method according to claim 5, wherein, following receiving service information of data to be transmitted, the method further comprises:
transmitting by the base station activation indication to a base station in a neighboring cell, wherein the activation indication is used to notify the base station in the neighboring cell to activate the service pre-configuration information.

## Patentansprüche

1. Verfahren zur Mehrzellenkonfiguration, umfassend:
Empfangen von Dienstkonfigurationsinformationen durch ein Endgerät, wobei die Dienstkonfigurationsinformationen mindestens eines aus eine Berichtsbedingung von Dienstinformationen von zu übertragenden Daten, für Mehrzellenbetrieb verwendete Kandidatenzellen, Konfigurationsinformationen der Kandidatenzellen und für Mehrzellenbetrieb verwendete öffentliche Zellenkonfigurationsinformationen umfassen;
Übertragen auf der Grundlage der Berichtsbedingung (S401) durch das Endgerät der Dienstinformationen von Daten, welche übertragen werden sollen, wobei die Dienstinformationen mindestens eines aus Funkträgerinformationen der zu übertragenden Daten, logischen Kanalinformationen der zu übertragenden Daten, eine Zugriffskategorie der zu übertragenden Daten, eine Zugriffsidentität der zu übertragenden Daten, einen Mehrzellenbetriebsindikator, einen Duplikationsübertragungsindikator und einen Indikator, der anzeigt, dass eine Dienstdatenmenge der zu übertragenden Daten eine voreingestellte Dienstmengenschwelle überschreitet, umfasst; und
Empfangen (S402) von Mehrzellen-Konfigurationsinformationen durch das Endgerät, wobei die Mehrzellen-Konfigurationsinformationen das Endgerät anweisen, einen Mehrzellenbetrieb wieder aufzunehmen oder zu aktivieren,
wobei die Konfigurationsinformationen der Kandidatenzellen und/oder die für Mehrzellenbetrieb verwendeten öffentlichen Zellenkonfigurationsinformationen mindestens eines aus Cell- Radio Network Temporary Identity -, C-RNTI-, Packet Data Convergence Protocol, PDCP- und Service Data Adaptation Protocol-, SDAP-, Konfigurationsinformationen, Low-Layer-Konfigurationsinformationen, Direktzugriffs-Präambel, eine Messberichtsschwelle der Kandidatenzellen, eine Messberichtsschwelle von reservierten Zellen und eine für Mehrzellenbetrieb verwendete Zellenmessberichtsschwelle umfassen, wobei die reservierten Zellen Master Cell Group-, MCG-, Zellen und/oder Secondary Cell Group-, SCG-, Zellen umfassen, die für das UE konfiguriert sind,
wobei das Verfahren vor dem Empfang von Mehrzellen-Konfigurationsinformationen weiter umfasst:
Übertragen, durch das Endgerät, eines Physical Cell Identifier, PCI, und/oder einer Frequenz der Kandidatenzelle, deren erstes Messergebnis die Messberichtschwelle der Kandidatenzellen überschreitet, wobei sich das erste Messergebnis auf ein Messergebnis der Kandidatenzelle bezieht; und/oder,
Übertragen, durch das Endgerät, eines PCI und/oder einer Frequenz der reservierten Zelle, deren zweites Messergebnis die Messberichtschwelle der reservierten Zellen überschreitet, wobei sich das zweite Messergebnis auf ein Messergebnis der reservierten Zelle bezieht; und/oder,
Übertragen, durch das Endgerät, eines PCI und/oder einer Frequenz einer Zelle, deren drittes Messergebnis die Zellenmessberichtsschwelle für Mehrzellenbetrieb überschreitet, wobei sich das dritte Messergebnis auf ein Messergebnis der Zelle für Mehrzellenbetrieb bezieht.

2. Verfahren nach Anspruch 1, wobei
die Berichtsbedingung mindestens eines aus einen Berichtsindikator der Dienstinformationen, eine logische Kanalidentitätsliste, eine Funkträgeridentitätsliste, eine Zugriffskategorieliste, eine Zugriffsidentitätsliste und die voreingestellte Dienstmengenschwelle umfasst.

3. Verfahren nach Anspruch 1, weiter umfassend:
Empfangen von Zeitgeberkonfigurationsinformationen durch das Endgerät, wobei die Zeitgeberkonfigurationsinformationen dazu verwendet werden, einen Zeitgeber zu konfigurieren, der von einem Netzwerk für die Kandidatenzellen und/oder die reservierten Zellen oder für alle Zellen in dem Netzwerk oder für eine Zellengruppe in dem Netzwerk oder für eine Basisstation in dem Netzwerk konfiguriert wird, wobei die reservierten Zellen MCG-Zellen und/oder SCG-Zellen umfassen, die für das Endgerät konfiguriert sind.

4. Verfahren nach Anspruch 3, weiter umfassend:
bevor der Zeitgeber abläuft, Reservieren, durch das Endgerät, von Konfigurationsinformationen der Kandidatenzellen und/oder der reservierten Zellen oder von öffentlichen Zellenkonfigurationsinformationen; und/oder,
nach Ablauf des Zeitgebers, Löschen der Konfigurationsinformationen der Kandidatenzellen und/oder der reservierten Zellen oder der öffentlichen Zellenkonfigurationsinformationen durch das Endgerät und Beenden der Messung und dem Berichten der Kandidatenzellen und/oder der reservierten Zellen.

5. Verfahren zur Mehrzellenkonfiguration, umfassend:
Übertragen von Dienstkonfigurationsinformationen durch eine Basisstation an ein Endgerät, wobei die Dienstkonfigurationsinformationen mindestens eines aus eine Berichtsbedingung von Dienstinformationen von zu übertragenden Daten, für Mehrzellenbetrieb verwendete Kandidatenzellen, Konfigurationsinformationen der Kandidatenzellen und für Mehrzellenbetrieb verwendete öffentliche Zellenkonfigurationsinformationen umfassen;
Empfangen (S501), durch die Basisstation, der Dienstinformationen von Daten, welche vom Endgerät übertragen werden sollen,
wobei die Dienstinformationen mindestens eines aus Funkträgerinformationen der zu übertragenden Daten, logischen Kanalinformationen der zu übertragenden Daten, einer Zugriffskategorie der zu übertragenden Daten, einer Zugriffsidentität der zu übertragenden Daten, einem Mehrzellenbetriebsindikator, einem Duplikationsübertragungsindikator und einem Indikator, der anzeigt, dass eine Dienstdatenmenge der zu übertragenden Daten eine voreingestellte Dienstmengenschwelle überschreitet, umfassen; und
Übertragen (S502) von Mehrzellen-Konfigurationsinformationen durch die Basisstation, wobei die Mehrzellen-Konfigurationsinformationen das Endgerät anweisen, einen Mehrzellenbetrieb wieder aufzunehmen oder zu aktivieren,
wobei die Konfigurationsinformationen der Kandidatenzellen und/oder die für Mehrzellenbetrieb verwendeten öffentlichen Zellenkonfigurationsinformationen mindestens eines aus Cell- Radio Network Temporary Identity-, C-RNTI-, Packet Data Convergence Protocol-, PDCP- und Service Data Adaptation Protocol-, SDAP-, Konfigurationsinformationen, Low-Layer-Konfigurationsinformationen, Direktzugriffs-Präambel, eine Messberichtsschwelle der Kandidatenzellen, eine Messberichtsschwelle von reservierten Zellen und eine für Mehrzellenbetrieb verwendete Zellenmessberichtsschwelle umfassen, wobei die reservierten Zellen Master Cell Group-, MCG-, Zellen und/oder Secondary Cell Group-, SCG-, Zellen umfassen, die für das Endgerät konfiguriert sind
wobei das Verfahren vor der Übertragung von Mehrzellen-Konfigurationsinformationen weiter umfasst:
Empfangen, durch die Basisstation, eines Physical Cell Identifier, PCI und/oder einer Frequenz der Kandidatenzelle, deren erstes Messergebnis die Messberichtschwelle der Kandidatenzellen überschreitet, wobei sich das erste Messergebnis auf ein Messergebnis der Kandidatenzelle bezieht; und/oder,
Empfangen, durch die Basisstation, eines PCI und/oder einer Frequenz der reservierten Zelle, deren zweites Messergebnis die Messberichtschwelle der reservierten Zellen überschreitet, wobei sich das zweite Messergebnis auf ein Messergebnis der reservierten Zelle bezieht; und/oder,
Empfangen, durch die Basisstation, eines PCI und/oder einer Frequenz einer Zelle, deren drittes Messergebnis die Zellenmessberichtsschwelle für Mehrzellenbetrieb überschreitet, wobei sich das dritte Messergebnis auf ein Messergebnis der Zelle für Mehrzellenbetrieb bezieht.

6. Verfahren nach Anspruch 5, wobei
die Berichtsbedingung mindestens eines aus einen Berichtsindikator der Dienstinformationen, eine logische Kanalidentitätsliste, eine Funkträgeridentitätsliste, eine Zugriffskategorieliste, eine Zugriffsidentitätsliste und die voreingestellte Dienstmengenschwelle umfasst.

7. Verfahren nach Anspruch 5, weiter umfassend:
Übertragen von Zeitgeberkonfigurationsinformationen durch die Basisstation, wobei die Zeitgeberkonfigurationsinformationen dazu verwendet werden, einen Zeitgeber zu konfigurieren, der von einem Netzwerk für die Kandidatenzellen und/oder die reservierten Zellen oder für alle Zellen in dem Netzwerk oder für eine Zellengruppe in dem Netzwerk oder für eine Basisstation in dem Netzwerk konfiguriert wird, wobei die reservierten Zellen MCG-Zellen und/oder SCG-Zellen umfassen, die für das Endgerät konfiguriert sind.

8. Verfahren nach Anspruch 7, wobei
das Verfahren vor der Übertragung von Dienstkonfigurationsinformationen weiter umfasst:
Anfordern, durch die Basisstation, von Dienstvorkonfigurationsinformationen von einer Basisstation in einer benachbarten Zelle, wobei die Dienstvorkonfigurationsinformationen zumindest eines aus Konfigurationsinformationen des Zeitgebers und Konfigurationsinformationen der Kandidatenzellen und/oder der reservierten Zellen umfassen.

9. Verfahren nach Anspruch 5, wobei
das Verfahren nach dem Empfang von Dienstinformationen über zu übertragende Daten weiter umfasst:
Übertragen, durch die Basisstation, einer Aktivierungsanzeige an eine Basisstation in einer benachbarten Zelle, wobei die Aktivierungsanzeige verwendet wird, um die Basisstation in der benachbarten Zelle zu benachrichtigen, die Dienstvorkonfigurationsinformationen zu aktivieren.

## Revendications

1. Procédé de configuration multicellulaire, comprenant :
la réception, par un terminal, d'informations de configuration de service, dans lequel les informations de configuration de service comprennent au moins l'une parmi une condition de rapport d'informations de service de données à transmettre, des cellules candidates utilisées pour un fonctionnement multicellulaire, des informations de configuration des cellules candidates et des informations de configuration publique de cellule utilisées pour un fonctionnement multicellulaire ;
la transmission, sur la base de la condition de rapport (S401), par le terminal, des informations de service de données à transmettre, dans lequel les informations de service comprennent au moins l'un parmi des informations de support radio des données à transmettre, des informations de canal logique des données à transmettre, une catégorie d'accès des données à transmettre, une identité d'accès des données à transmettre, un indicateur de fonctionnement multicellulaire, un indicateur de transmission en double et un indicateur indiquant qu'une quantité de données de service des données à transmettre dépasse un seuil de quantité de service prédéfini ; et
la réception (S402), par le terminal, d'informations de configuration multicellulaire, dans lequel les informations de configuration multicellulaire ordonnent au terminal de reprendre ou d'activer un fonctionnement multicellulaire,
dans lequel les informations de configuration des cellules candidates et/ou les informations de configuration publique de cellule utilisées pour un fonctionnement multicellulaire comprennent au moins l'un parmi des informations de configuration d'identité temporaire de réseau radio cellulaire, C-RNTI, de protocole de convergence de données en paquets, PDCP, et de protocole d'adaptation de données de service, SDAP, des informations de configuration de couche basse, un préambule d'accès aléatoire, un seuil de rapport de mesure des cellules candidates, un seuil de rapport de mesure de cellules réservées et un seuil de rapport de mesure de cellule utilisé pour un fonctionnement multicellulaire, dans lequel les cellules réservées comprennent des cellules de groupe de cellules maître, MCG, et/ou des cellules de groupe de cellules secondaires, SCG, configurées pour l'UE,
dans lequel avant la réception d'informations de configuration multicellulaire, le procédé comprend en outre :
la transmission, par le terminal, d'un identifiant de cellule physique, PCI, et/ou d'une fréquence de la cellule candidate dont un premier résultat de mesure dépasse le seuil de rapport de mesure des cellules candidates, dans lequel le premier résultat de mesure fait référence à un résultat de mesure de la cellule candidate ; et/ou,
la transmission, par le terminal, d'un PCI et/ou d'une fréquence de la cellule réservée dont un deuxième résultat de mesure dépasse le seuil de rapport de mesure des cellules réservées, dans lequel le deuxième résultat de mesure fait référence à un résultat de mesure de la cellule réservée ; et/ou,
la transmission, par le terminal, d'un PCI et/ou d'une fréquence d'une cellule dont un troisième résultat de mesure dépasse le seuil de rapport de mesure de cellule pour un fonctionnement multicellulaire, dans lequel le troisième résultat de mesure fait référence à un résultat de mesure de la cellule pour un fonctionnement multicellulaire.

2. Procédé selon la revendication 1, dans lequel,
la condition de rapport comprend au moins l'un parmi un indicateur de rapport des informations de service, une liste d'identités de canal logique, une liste d'identités de support radio, une liste de catégories d'accès, une liste d'identités d'accès et le seuil de quantité de service prédéfini.

3. Procédé selon la revendication 1, comprenant en outre :
la réception, par le terminal, d'informations de configuration de minuterie, dans lequel les informations de configuration de minuterie sont utilisées pour configurer une minuterie qui est configurée par un réseau pour les cellules candidates et/ou les cellules réservées, ou pour toutes les cellules dans le réseau, ou pour un groupe de cellules dans le réseau, ou pour une station de base dans le réseau, dans lequel les cellules réservées comprennent des cellules MCG et/ou des cellules SCG configurées pour le terminal.

4. Procédé selon la revendication 3, comprenant en outre :
avant l'expiration de la minuterie, la réservation, par le terminal, d'informations de configuration des cellules candidates et/ou des cellules réservées, ou d'informations de configuration publique de cellule ; et/ou,
après l'expiration de la minuterie, la suppression, par le terminal, des informations de configuration des cellules candidates et/ou des cellules réservées, ou des informations de configuration publique de cellule, et l'arrêt de la mesure et du rapport des cellules candidates et/ou des cellules réservées.

5. Procédé de configuration multicellulaire, comprenant :
la transmission, par une station de base, d'informations de configuration de service à un terminal, dans lequel les informations de configuration de service comprennent au moins l'une parmi une condition de rapport d'informations de service de données à transmettre, des cellules candidates utilisées pour un fonctionnement multicellulaire, des informations de configuration des cellules candidates et des informations de configuration publique de cellule utilisées pour un fonctionnement multicellulaire ; la réception (S501), par la station de base, des informations de service de données à transmettre depuis le terminal,
dans lequel les informations de service comprennent au moins l'un parmi des informations de support radio des données à transmettre, des informations de canal logique des données à transmettre, une catégorie d'accès des données à transmettre, une identité d'accès des données à transmettre, un indicateur de fonctionnement multicellulaire, un indicateur de transmission en double et un indicateur indiquant qu'une quantité de données de service des données à transmettre dépasse un seuil de quantité de service prédéfini ; et
la transmission (S502), par la station de base, d'informations de configuration multicellulaire, dans lequel les informations de configuration multicellulaire ordonnent au terminal de reprendre ou d'activer un fonctionnement multicellulaire,
dans lequel les informations de configuration des cellules candidates et/ou les informations de configuration publique de cellule utilisées pour un fonctionnement multicellulaire comprennent au moins l'un parmi des informations de configuration d'identité temporaire de réseau radio cellulaire, C-RNTI, de protocole de convergence de données en paquets, PDCP, et de protocole d'adaptation de données de service, SDAP, des informations de configuration de couche basse, un préambule d'accès aléatoire, un seuil de rapport de mesure des cellules candidates, un seuil de rapport de mesure de cellules réservées et un seuil de rapport de mesure de cellule utilisé pour un fonctionnement multicellulaire, dans lequel les cellules réservées comprennent des cellules de groupe de cellules maître, MCG, et/ou des cellules de groupe de cellules secondaires, SCG, configurées pour le terminal,
dans lequel avant la transmission d'informations de configuration multicellulaire, le procédé comprend en outre :
la réception, par la station de base, d'un identifiant de cellule physique, PCI, et/ou d'une fréquence de la cellule candidate dont un premier résultat de mesure dépasse le seuil de rapport de mesure des cellules candidates, dans lequel le premier résultat de mesure fait référence à un résultat de mesure de la cellule candidate ; et/ou,
la réception, par la station de base, d'un PCI et/ou d'une fréquence de la cellule réservée dont un deuxième résultat de mesure dépasse le seuil de rapport de mesure des cellules réservées, dans lequel le deuxième résultat de mesure fait référence à un résultat de mesure de la cellule réservée ; et/ou,
la réception, par la station de base, d'un PCI et/ou d'une fréquence d'une cellule dont un troisième résultat de mesure dépasse le seuil de rapport de mesure de cellule pour un fonctionnement multicellulaire, dans lequel le troisième résultat de mesure fait référence à un résultat de mesure de la cellule pour un fonctionnement multicellulaire.

6. Procédé selon la revendication 5, dans lequel,
la condition de rapport comprend au moins l'un parmi un indicateur de rapport des informations de service, une liste d'identités de canal logique, une liste d'identités de support radio, une liste de catégories d'accès, une liste d'identités d'accès et le seuil de quantité de service prédéfini.

7. Procédé selon la revendication 5, comprenant en outre :
la transmission, par la station de base, d'informations de configuration de minuterie, dans lequel les informations de configuration de minuterie sont utilisées pour configurer une minuterie qui est configurée par un réseau pour les cellules candidates et/ou les cellules réservées, ou pour toutes les cellules dans le réseau, ou pour un groupe de cellules dans le réseau, ou pour une station de base dans le réseau, dans lequel les cellules réservées comprennent des cellules MCG et/ou des cellules SCG configurées pour le terminal.

8. Procédé selon la revendication 7, dans lequel,
avant la transmission d'informations de configuration de service, le procédé comprend en outre :
la demande, par la station de base, d'informations de préconfiguration de service à une station de base dans une cellule voisine, dans lequel les informations de préconfiguration de service comprennent au moins les unes parmi des informations de configuration de la minuterie et des informations de configuration des cellules candidates et/ou des cellules réservées.

9. Procédé selon la revendication 5, dans lequel,
après la réception d'informations de service de données à transmettre, le procédé comprend en outre :
la transmission, par la station de base, d'une indication d'activation à une station de base dans une cellule voisine, dans lequel l'indication d'activation est utilisée pour notifier à la station de base dans la cellule voisine d'activer les informations de préconfiguration de service.
